**Europäisches Patentamt**

**European Patent Office**

**Office européen des brevets**

(19)

(11) **EP 0 792 894 A2**

(12) **EUROPÄISCHE PATENTANMELDUNG**

(43) Veröffentlichungstag:
03.09.1997 Patentblatt 1997/36

(51) Int. Cl.⁶: **C08F 255/00**, C08F 287/00

(21) Anmeldenummer: 97102469.0

(22) Anmeldetag: 15.02.1997

(84) Benannte Vertragsstaaten:
AT BE CH DE DK ES FR GB IT LI NL SE

(30) Priorität: 28.02.1996 DE 19607430
28.02.1996 DE 19607481

(71) Anmelder: PCD-Polymere Gesellschaft m.b.H.
A-4021 Linz (AT)

(72) Erfinder:
• **Rätzsch, Manfred, Prof. Dr.**
4202 Kirchschlag (AT)
• **Hesse, Achim, Dr.**
4020 Linz (AT)

• **Bucka, Harmut**
4622 Eggendorf (AT)
• **Reichelt, Nobert, Dr.**
4501 Neuhofen (AT)
• **Panzer, Ulf, Dr.**
4320 Perg (AT)

(74) Vertreter: **Schinke, Herbert, Dr. Dr.,**
**Patentanwaltskanzlei**
**LEUPATENT,**
**Am Haupttor Bau 24**
**06236 Leuna (DE)**

(54) **Kontinuierliches Verfahren zur Modifizierung von Polyolefinen in der festen Phase**

(57)     Modifizierte Polyolefine lassen sich durch ein kontinuierliches Verfahren, bei dem eine Sorption von ungesättigten Monomeren und thermisch zerfallenden Radikalbildnern aus der Gasphase durch die Polyolefinpartikel erfolgt, und bei dem die Polyolefinpartikel, in denen die thermisch zerfallenden Radikalbildner und die ungesättigten Monomere sorbiert sind, auf die Zerfallstemperatur der thermisch zerfallenden Radikalbildner unter Mikrowelleneinwirkung oder konvektiver Wärmezuführung erwärmt werden, herstellen.

Die modifizierten Polyolefine sind zur Herstellung von Folien, Fasern, Platten, Beschichtungen, Rohren, Hohlkörpern, Schaumstoffen und Formstoffen geeignet.

EP 0 792 894 A2

**Beschreibung**

Die Erfindung betrifft ein kontinuierliches Verfahren zur Modifizierung von Polyolefinen in fester Phase durch Umsetzung mit ungesättigten Monomeren.

Die Modifizierung von Polyolefinen durch Erzeugung von Radikalstellen an der Polymerkette von Polyolefinen und Umsetzung mit ungesättigten Monomeren und anderen organischen Verbindungen ist allgemein bekannt. Dabei schließen die Verfahren zur Erzeugung dieser Radikalstellen die Zugabe von Radikalbildnern wie Peroxide oder Azoverbindungen, die Peroxygenierung der Polyolefine und die Behandlung mit energiereicher Strahlung ein.

In jüngster Zeit sind zahlreiche Entwicklungen zur Festphasenmodifizierung von Polyolefinen zu verzeichnen. Dabei wird unter Festphasenpfropfung das Ankoppeln einer reaktiven ungesättigten Verbindung an eine durch Radikalübertragung oder energiereiche Strahlung erzeugte Radikalstelle am polymeren Feststoff, der in Partikelform, beispielsweise als Pulver oder Granulat, als Folie oder Faser vorliegt, unterhalb dessen Schmelzpunktes, d. h. in der Festphase, verstanden.

Der Vorteil liegt gegenüber der Schmelzemodifizierung vor allem in der niedrigeren Reaktionstemperatur und der damit drastisch verringerten Molmassenänderung und gegenüber der Lösungsmodifizierung im Verzicht auf den Einsatz organischer Lösungsmittel sowie deren Entfernung nach dem Modifizierungsschritt.

Eine Reihe an sich bekannter Verfahren der Festphasenmodifizierung ist durch die Zugabe flüssiger Monomerer bzw. vinylgruppenhaltiger Verbindungen charakterisiert.

So beschreibt DE 4123972 ein diskontinuierliches Verfahren zur Herstellung von polarmodifiziertem Polyethylen durch radikalische Pfropfpolymerisation von Carboxylmonomeren und Carboxylmonomergemischen, wobei dem Polyethylen 50 bis 8o Gewichtsteile Carboxylmonomer oder Carboxylmonomergemisch zugesetzt, dieser Ansatz zusammen mit dem Radikalbildner oder Radikalbildnergemisch dispergiert und im Temperaturbereich zwischen 60 und 100°C polymerisiert wird.

In DD 135622 wird ein Verfahren zur Pfropfcopolymerisation von Styren auf polyolefinische Pfropfsubstrate wie Polyethylen, Ethylen-Propylen-Dien-Terpolymere, Ethylen-Vinylacetat-Copolymere, Polypropylen und chloriertes Polyethylen beschrieben, wobei Styren oder Styren-Monomer-Mischungen unterhalb der Monomersättigungsdampfdrücke auf das trockene Polymersubstrat oder auf das Polymersubstrat in Gegenwart von Wasser oder anderen inerten flüssigen Medien erfolgt.

DD 135621 beschreibt unter gleichen Bedingungen die Pfropfung von Butadien und Butadien enthaltender Monomermischungen und DD 131752 die Pfropfung von Vinylacetat und Vinylacetat enthaltender Monomermischungen auf die gleichen Pfropfsubstrate.

Die Zugabe flüssiger ungesättigter Monomerer führt in der Regel dazu, daß sich die flüssigen Monomeren an den Partikeloberflächen und zwischen den Partikeln konzentrieren. Erfolgt bei einer solch inhomogenen Monomerverteilung die Zersetzung des Initiatiors, so resultiert daraus eine verstärkte Homopolymerisation des Monomeren auf Kosten der Pfropfpolymerisation, d. h. eine Verringerung der Pfropfeffizienz. Darüber hinaus weisen die so hergestellten Materialien Produktinhomogenitäten auf, die die Gebrauchseigenschaffen verschlechtern.

Eine Möglichkeit, diese Nachteile zu reduzieren, wird in EP-A-439079 aufgezeigt. Es wird ein Verfahren zur Herstellung gepfropfter Polyolefincopolymerer beschrieben, bei dem die Radikalbildner und die Monomeren jeweils als flüssige Phase, entweder als reine Flüssigkeit oder als flüssige Lösung, zu Polyolefinpartikeln zugegeben werden, wobei die Rate der Monomerzugabe klein ist und 4,5 pph/min nicht übersteigt. Die Monomerzugabe erfolgt entweder unmittelbar, nachdem die gesamte Radikalbildnermenge den auf einer für den Zerfall des Radikalbildners erforderlichen Temperatur befindlichen Polyolefinpartikeln zugesetzt wurde, oder gleichzeitig mit der Radikalbildnerzugabe, oder als Kombination dieser beiden genannten Verfahren mit zeitlicher Überlappung von Initiator- bzw. Monomerzugabe. Die bereits dargestellten wesentlichen Nachteile einer inhomogenen Verteilung von Monomeren und von gepfropften Bereichen treten jedoch auch bei diesem Verfahren auf. Das ist insbesondere der Fall, wenn bei der Monomerzugabe bereits Radikalreaktionen stattfinden. Die Folge davon sind wiederum Produktinhomogenitäten.

Untersuchungen zur Gasphasen-Diffusions- und Sorptionskinetik von ungesättigten Monomeren und radikalischen Initiatoren in Polyolefinpulver wurden von Rätzsch, Bucka und Wohlfahrt durchgeführt [Angew. Makromol. Chem. 229 (1995), 145-158].

Ein weiteres Problem der Modifizierung von Polyolefinen in fester Phase ist die schlechte Wärmeleitfähigkeit der Polyolefinpartikel. Die üblichen Verfahren zur Erwärmung fester Polyolefinpartikel über Wärmetauscher (die Reaktorwand) oder heiße Gasstöme resultieren in hohen Aufheizzeiten und damit kleinen Raum-Zeit-Ausbeuten (Vgl. DD 275159, DD 275160, DD 275161). Die zwangsläufig entstehenden Temperaturgradienten im Polyolefinpartikel führen, bedingt durch den thermischen Zerfallsmechanismus der verwendeten Radikalbildner, zu einer von außen nach innen fortschreitenden Modifizierungsreaktion. Innerhalb des Polyolefinkorns kommt es zur Ausbildung von Konzentrationsgradienten der eingesetzten Monomeren, was letztlich zu einer ungleichmäßigen Modifizierung führt.

Für die Vernetzung von polaren Polymeren bzw. unpolaren Polymeren mit polaren Hilfsstoffen wird der Einsatz von Hochfrequenzfeldern beschrieben. Diese hochfrequenten Wechselfelder, insbesondere Mikrowellen, werden beispielsweise in US 4683248 zur Vernetzung von Polystyren und kernsubstituierten Polystyrenderivaten durch Peroxide und

2

mehrfach ungesättigte Monomere als Vernetzungsbeschleuniger sowie in DD 225471 zur Vernetzung von Polyethylen durch Peroxide beschrieben.

DD 203058 beschreibt die Vernetzung von Polyethylen durch Peroxide im Hochfrequenzfeld, dabei erfolgt die Vernetzung am Formteil nach dem Extrusionsprozeß.

In US 3755519, US292780 und DE 280325 erfolgt die Einwirkung des Hochfrequenzfeldes direkt nach dem Austritt des Formteils aus der Düse, bei Temperaturen nahe der Schmelztemperatur der verwendeten Polymeren.

Bei allen Verfahren wird auf erhebliche Temperaturerhöhungen infolge der Hochfrequenzfelder hingewiesen.

Die Aufgabe für die vorliegende Erfindung bestand daher in der Entwicklung eines kontinuierlichen Verfahrens für die Radikalbildner-initiierte Modifizierung von Polyolefinpartikeln durch ungesättigte Monomere, welche die aufgeführten Nachteile bekannter Verfahren vermeiden und mit deren Hilfe homogene Modifizierungsprodukte hergestellt werden können.

Diese Aufgabe wurde durch ein kontinuierliches Verfahren zur Modifizierung von Polyolefinen in fester Phase durch Umsetzung von Polyolefinpartikeln mit ungesättigten Monomeren in Gegenwart von thermisch zerfallenden Radikalbildnern und gegebenenfalls mikrowellenaktiven Hilfsstoffen gelöst.

Die Polyolefinpartikel bestehen aus üblichen linearen oder verzweigten Polyethylen - Homo- und Copolymeren, Cycloolefin-Ethylen-Copolymeren, Polypropylen-Homopolymeren, statistischen Propylen-Copolymeren, Propylen-Blockcopolymeren, statistischen Propylen-Blockcopolymeren, elastomeren Polypropylenen, isotaktischem Polybuten-1 und/oder 4-Methylpenten-1- Homo- und -Copolymeren sowie aus Gemischen dieser Polyolefine.

Erfindungsgemäß werden in einem 1. Verfahrensschritt die ungesättigten Monomere und gegebenenfalls die thermisch zerfallenden Radikalbildner aus der Gasphase von den Polyolefinpartikeln bei einer Temperatur $T_1$, die der Bedingung der Größengleichung $T_1 [K] = B_S / \ln (A_s/\tau_s)$ genügt, sorbiert, wobei die stoffspezifische Konstante $B_S$ des thermisch zerfallenden Radikalbildners - 1,4 x 10$^4$ bis -1,8 x 10$^4$ cal/Mol, die stoffspezifische Konstante $A_s[s]$ 1 x 10$^{-15}$ bis 1 x 10$^{-18}$ s und die mittlere Sorptionszeit $\tau_s[S]$ 600 s bis 3600 s beträgt.

Als ungesättigte Monomere werden übliche Monovinylverbindungen, Divinylverbindungen, Allylverbindungen, Acrylsäure, Acrylsäurederivate, Diene, Methacrylsäure und/oder Methacrylsäurederivate in Anteilen von 0,05 bis 30 Masse%, bezogen auf die eingesetzten Polyolefine, angewandt.

Die Polyolefinpartikel, in denen die ungesättigten Monomere und die thermisch zerfallenden Radikalbildner sorbiert sind, werden in einem 2. Verfahrensschritt bei einer mittleren Verweilzeit von 5 s bis 1800 s auf die Zerfallstemperatur des thermisch zerfallenden Radikalbildners unter Mikrowelleneinwirkung oder konvektiver Wärmezuführung erwärmt .

Die modifizierten Polyolefine werden gegebenenfalls in einem 3.Verfahrensschritt in einen Postreaktor gefördert und in einem 4.Verfahrensschritt in an sich bekannter Weise einem Extruder oder kontinuierlichen Kneter zugeführt, erwärmt , aufgeschmolzen und granuliert.

Vor dem 1. Verfahrensschritt, im 2., 3. und/oder 4.Verfahrensschritt können den Polyolefinen in an sich bekannter Weise als Hilfsstoffe 0,01 bis 2,5 Masse% Stabilisatoren, 0,1 bis 1 Masse% Antistatika, 0,2 bis 3 Masse% Pigmente, o,o5 bis 1 Masse% Nukleierungsmittel , 5 bis 4o Masse% Füll- und/oder Verstärkerstoffe, 2 bis 2o Masse% Flammschutzmittel und/oder o,o1 bis 1 Masse% Verarbeitungshilfsmittel, bezogen auf das eingesetzte Polyolefin, zugesetzt werden.

Die Polyolefine werden als Partikel in der festen Phase eingesetzt und liegen beispielsweise als Pulver, Granulate oder Grieße vor. Besonders vorteilhaft erweist es sich, direkt aus der Polymerisationsanlage kommende Polyolefinpartikel zu modifizieren.

Als ungesättigte Monomere sind alle aus Gasphase sorbierbaren ungesättigten monomeren Verbindungen sowie Mischungen dieser ungesättigten Verbindungen einsetzbar, die mit Hilfe von freien Radikalen polymerisierbar sind:

- Monovinylverbindungen wie p-Acetoxystyren, Aminostyren, tert.Butylstyren, Bromstyren, Chlorstyren, Dichlorstyren, m-Diethylaminoethylstyren, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydrorypropylstyren, m-Hydroxystyren, Isopropylstyren, Methoxy-styren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetorysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat , Vinyltriethorysilan, Vinyltrimethoxysilan, Vinyl-tris-(trimethoxysiloxy)silan und/oder Vinyltrimethylsilan ;

- Divinylverbindungen wie Divinylanilin, m-Divinylbenzen, p-Divinylbenzen, Divinylpentan, Divinylpropan und/oder 1,3-Divinyl-1,1,3,3-tetramethyldisiloxan ;

- Allylverbindungen wie Allylacetat, Allylacrylat, Allylalkohol, Allylbenzen, Allylbenzylether, 3-Allyl-1-buten, Allylbutylether, Allylcyanurat, Allylcyclohexan, Allyldiethylketon, 4-Allyl - 2,6- dimethoxyphenol, Allyldimethylchlorsilan, Allylepoxypropylether, Allylethylether, Allylglycidylether, Allylglycidylhexylhydrophthalat, Allylglycidylphthalat, Allylheptanoat, Allylhexanoat, Allylmethacrylat, Allylmethoxyphenol, Allylmethylether, Allylmethylmaleat, Allyloxy-2,3-propandiol, N-Allylstearamid, Allyltolylether, Allyltrichlorsilan, Allyltriethoxysilan, Allyltrimethoxysilan, Allyltrimethylsilan, Allyltriphenylsilan und/oder Allylvinylether;

- Acrylsäure und Acrylsäurederivate wie Acrylamid, Acrylnitril, Benzylacrylat, Butylacrylat, Cyclohexylacrylat, N,N - Dimethylacrylamid, Dodecylacrylat, Ethylacrylat, 2-Ethylhexylacrylat, 2-Ethoxyethylacrylat, Glycidylacrylat, Hydroxyethylacrylat, Isopropylacrylat , 2-Methoxyethylacrylat, 4-Methoxybenzylacrylat, Methylacrylat, Natriumacrylat, N-tert.butoxycarbonyl-2-aminoethylacrylat, Octylacrylat, Phenylmethylacrylat, Phenylacrylat, n-Propylacrylat und/oder Tetrahydrofurfurylacrylat ;

- Diene wie Butadien, Butadien-1-carbonsäure, Chloropren, Cyclohexadien-1,3, Cyclohexadien-1,5, Cyclopentadien, 2,3-Dimethylbutadien, 1-Ethoxybutadien, 1,4-Heptadien, 1,4-Hexadien, 1,6-Hexadien, Isopren, Norbornadien, und/oder 1,4-Pentadien ;
    Geeignete thermisch zerfallende Radikalbildner sind :

- Acylperoxide wie Benzoylperoxid, 4-Chlorbenzoylperoxid, 3-Methorybenzoylperoxid und/oder Methylbenzoylperoxid;

- Alkylperoxide wie Allyl-tert.butylperoxid, 2,2-Bis(tert.butylperorybutan), 1,1-Bis-(tert.butylperoxi-)-3,3,5-trirnethylcyclohexan, n-Butyl-4,4-bis(tert.butylperoxi)valerat, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1.1-Di(tert.amylperoxi)cyclohexan, tert.Amylperoxid, tert.Butylcumylperoxid, tert.Butylperoxid und/oder 1-Hydroxybutyl-n-butylperoxid;

- Perester und Peroxicarbonate wie Butylperacetat, Cumylperacetat, Cumylperpropionat, Cycloherylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butlbicyclo-(2,2,1)heptan-percarboxylat, tert.Butyl-4-carbomethoxyperbutyrat, tert.Butylcyclobutanpercarborylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)perbenzoat, tert.Butyl-4-methoxyperbenzoat, tert.Butylperbenzoat, tert.Butylcarboxycyclohexan, tert.-Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylpercrotonat, tert.Butylpermaleinsäure, tert. Butylpermethacrylat, tert. Butylperoctoat, tert. Butylperoxyisopropylcarbonat, tert.Butylperisobutyrat, tert.Butylperacrylat und/oder tert.Butylperpropionat;

- Azoverbindungen wie 2,2'-Azo-bis-methyl-2-methylpropionat, Azo-bis-(N,N'-diethylenisobutyramidin), 2,2'-Azo-bis-2-methylpropionitril, 1,1'-Azo-bis-1-phenylethan und/oder 1,1'-Azo-bis-1-phenylpropan.

In dem 1. Verfahrensschritt wird die Temperatur $T_1$ erfindungsgemäß so gewählt, daß der Zerfall der thermisch zerfallenden Radikalbildner mit sehr niedriger Geschwindigkeit abläuft.
    Das ist dann der Fall, wenn die Temperatur $T_1$ der Bedingung der Größengleichung $T_1[K] = B_S / \ln (A_s/\tau_s)$ genügt. Dabei sind $A_S$ und $B_S$ stoffspezifische Konstanten der thermisch zerfallenden Radikalbildner, die experimentell ermittelt bzw. aus Stoffdatensammlungen entnommen werden können, und $\tau_s$ ist die mittlere notwendige Sorptionszeit der ungesättigten Monomeren bzw. der thermisch zerfallenden Radikalbildner.

$$\text{Die stoffspezifische Konstante } A_S \text{ ergibt sich aus } A_S = \frac{1}{k_\infty} {}^*0.0512933$$

$$\text{Die stoffspezifische Konstante } B_S \text{ ergibt sich aus } B_S = E / 1,987$$

Dabei ist $k_\infty$ der Häufigkeitsfaktor der Radikalbildnerzerfallskonstante in 1/s und E die Aktivierungsenergie des Radikalbildnerzerfalls in cal/mol (siehe Polymer Handbook., 3rd Edition, J.Wiley & Sons, 1989, II/1). Die mittlere Sorptionszeit $\tau_s$ beträgt dabei erfindungsgemäß 600 s bis 3600 s.

Das erfindungsgemäße Verfahren zeichnet sich vor allem dadurch aus, daß im ersten Verfahrensschritt die ungesättigten Monomere und gegebenenfalls die thermisch zerfallenden Radikalbildner gasförmig vorliegen und aus der Gasphase sorbiert werden, so daß eine Kondensation an den Polyolefinpartikeloberflächen und zwischen den Partikeln vermieden wird. Erfindungsgemäß wird für die Sorption eine Temperatur $T_1$ gewählt , bei der die Halbwertszeit des thermisch zerfallenden Radikalbildners ein Vielfaches der für die Erreichung eines stationären Sorptionsgleichwichtes erforderlichen Zeit ist, um den Zerfall des thermisch zerfallenden Radikalbildners im 1. Verfahrensschritt auszuschließen. Daher ist es bei ausreichender Verweilzeit möglich, die thermisch zerfallenden Radikalbildner und die ungesättigten Monomeren weitgehend homogen in den Polyolefinpartikeln zu verteilen.

Bei der Erwärmung unter Mikrowelleneinwirkung im 2. Verfahrensschritt wird das Gemisch der mit thermisch zerfallenden Radikalbildnem, Monomeren und gegebenfalls mit mikrowellenaktiven Hilfsstoffen behandelten Polyolefinpartikel kontinuierlich einem Hochfrequenzapplikator zugeführt und einem Hochfrequenzfeld ausgesetzt , wodurch die Umsetzung der Polyolefinpartikel mit den ungesättigten Monomeren initiiert wird.

Gemäß der Ausgestaltung der vorliegenden Erfindung werden bei der Mikrowellenvariante im 2. Verfahrensschritt die Hochfrequenzfelder nach der Sorption der thermisch zerfallenden Radikalbildner und ungesättigten Monomeren in den Polyolefinpartikeln und gegebenenfalls der Zugabe von mikrowellenaktiven Substanzen zur thermischen Aktivierung und zum Zerfall der thermisch zerfallenden Radikalbildner mit dem Ziel genutzt, radikalische Reaktionen von ungesättigten Monomeren zu initiieren.

Dabei erweist sich die Methode der dielektrischen Erwärmung der mit thermisch zerfallenden Radikalbildnern, ungesättigten Monomeren und gegebenenfalls mit weiteren mikrowellenaktiven Zusätzen beladenen Polyolefinpartikel im 2. Verfahrensschritt, bei der die thermisch zerfallenden Radikalbildner durch das Hochfrequenzfeld aktiviert werden und zerfallen, als besonders effektiv für Pulverschüttungen. Die Hochfrequenzfelder werden erfindungsgemäß mit Frequenzen im Bereich von 2,4 bis 2,5 GHz betrieben.

In der Regel resultiert aus der Einwirkung des Hochfrequenzfeldes auf Gemische aus Polyolefinpartikeln, thermisch zerfallenden Radikalbildnern und ungesättigten Monomeren eine Aktivierung des thermisch zerfallenden Radikalbildners unter Radikalbildung, die zur Wasserstoffabstraktion an der Polyolefinkette und nachfolgend zu einer Kopplung der ungesättigten Monomere mit dem Polyolefin führt.

Falls die Aktivität des Gemisches aus Polyolefinpartikeln, thermisch zerfallenden Radikalbildnern und ungesättigten Monomeren so gering ist, daß die Kopplungsreaktion durch die alleinige Hochfrequenzeinwirkung nicht bzw. erst nach längerer Einwirkung erreicht wird, können zusätzlich mikrowellenaktive Hilfsstoffe eingesetzt werden.

Als mikrowellenaktive Hilfsstoffe werden bei der Mikrowellenvariante der Wärmezuführung im 2. Verfahrensschritt vorzugsweise Stoffe, die dielektrische Verlustfaktoren $\tan\sigma > 0,05$ (2,45 GHz) aufweisen, verwendet. Bevorzugt eingesetzt werden Stoffe und/oder Stoffgemische, welche die Polyoleflnpartikel gut benetzen oder von den Partikeln sorbiert werden und an der Umsetzung chemisch nicht teilnehmen. Beispiele dieser Stoffe sind aliphatische bzw. aromatische Alkohole, Ketone, Aldehyde, Ester, Wasser, Ruß , Salze der Stearinsäure und Kombinationen der genannten Stoffe untereinander.

Die mittlere Verweilzeit der Polyolefinpartikel im Hochfrequenzfeld beim 2. Verfahrensschritt nach der Mikrowellenvariante der Wärmezuführung beträgt bevorzugt 300 bis 600 s.

Bei der Variante der konvektiven Wärmezuführung im 2.Verfahrensschritt werden die Polyolefinpartikel, in denen die ungesättigten Monomere und die thermisch zerfallenden Radikalbildner sorbiert sind, erfindungsgemäß auf eine Temperatur $T_2$[K], die der Bedingung der Größengleichung $T_2 = B_M / \ln (A_M/\tau_M)$ genügt, erwärmt.

Dabei beträgt die Konstante $B_M$[cal/mol] erfindungsgemäß - $1 \times 10^4$ bis - $2 \times 10^4$ cal/Mol, vorzugsweise - $1,4 \times 10^4$ bis - $1,8 \times 10^4$ cal/Mol, die Konstante $A_M$[S] $1 \times 10^{-13}$ bis $1 \times 10^{-16}$ s und die mittlere Verweilzeit $\tau_M$ [s] der Polyolefinpartikel bei der Temperatur $T_2$ bevorzugt 180 bis 1800 s.

Bei der Variante der konvektiven Wärmezuführung im 2.Verfahrensschritt erfolgt die Erwärmung auf die Temperatur $T_2$ insbesondere durch Kontakt mit heißen Oberflächen, bevorzugt in der Einzugszone eines Extruders, oder mit einem heißen Gasstrom im Gegenstrom.

Bei der Variante der konvektiven Wärmezuführung im 2. Verfahrensschritt werden durch die Erwärmung auf die Temperatur $T_2$ infolge des Zerfalls der thermisch zerfallenden Radikalbildner Radikale gebildet, die zu einer Wasserstoff-Abstraktion an der Polyolefin-Kette und nachfolgend zu einer Kopplung der ungesättigten Monomeren an das olefinische Polymer führt. Die Halbwertszeiten der thermisch zerfallenden Radikalbildner liegen bei der im 2. Verfahrensschritt angewandten Temperatur $T_2$ bei etwa 1 bis 240 min, bevorzugt bei 5 bis 100 Minuten. Besonders bevorzugt werden thermisch zerfallende Radikalbildner mit einer Halbwertszeit von 5 bis 60 min im Temperaturbereich von 80 bis 180°C eingesetzt.

Den modifizierten Polyolefinen können gegebenenfalls im 3. Verfahrensschritt im Postreaktor zusätzlich weitere ungesättigte Monomere in Anteilen von 0.05 bis 40 Masse%, bezogen auf die Gesamtmonomermenge, zugesetzt werden.

Die Mischung der Polyolefine mit den Hilfsstoffen erfolgt bevorzugt vor dem 1.Verfahrensschritt in kontinuierlichen Durchlaufmischern.

Bei einer speziellen Verfahrensvariante werden als Diene Butadien und/oder Isopren eingesetzt.

Als Stabilisatoren, die den Polyolefinen vor dem 1. Verfahrensschritt, im 2., 3. und/oder 4. Verfahrensschritt zugesetzt werden können, werden bevorzugt Mischungen aus 0,01 bis 0,6 Masse% phenolischen Antioxidantien, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS) eingesetzt.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxvphenol, 2,2'-Methylenbis(6-tert.butyl-4-methylphenol), 4,4'-Thio-bis-(6-tert.butyl-2-methylphenol), 3(3,5-Di-tert.butyl -4- hydroxyphenyl)-propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6,-tetramethylpiperidyl)-amino]-hexamethylen-4-(2,2,6,6-tetra-methyl)piperidyl)-imino] besonders geeignet.

Als Verarbeitungshilfsmittel können den Polyolefinen vor dem 1. Verfahrensschritt, im 2., 3. und/ oder 4. Verfahrensschritt Calciumstearat, Magnesiumstearat und/oder Wachse zugesetzt werden.

Durch die im 1. Verfahrensschritt erreichte, weitgehend homogene Verteilung von ungesättigtem Monomer und thermisch zerfallendem Radikalbildner in den Polyolefinpartikeln, kombiniert mit dem durch Hochfrequenzeinwirkung oder konvektiver Wärmezuführung thermisch aktivierten Zerfall der Radikalbildnermoleküle, wird eine homogene Verteilung der modifizierten Bereiche in den Polyolefinpartikeln erreicht.

Diese homogene Verteilung ist letztlich eine entscheidende Einflußgröße auf die sich im Produkt ausbildende Morphologie und bewirkt damit wesentlich die makroskopischen Produktkennwerte wie Zähigkeit, Verarbeitbarkeit und Spannungsrißbeständigkeit.

Die modifizierten Polyolefine sowie Mischungen mit nichtmodifizierten Polyolefinen sind erfindungsgemäß zur Herstellung von Folien, Fasern, Platten, Beschichtungen, Rohren, Hohlkörpern, Schaumstoffen und Formstoffen geeignet.

Dabei zeichnen sich die unter Verwendung unpolarer ungesättigter Monomerer erhaltenen Produkte durch verbesserte mechanische Eigenschaften (Schlagzähigkeit, Spannungsrißbeständigkeit und Biege E-Modul) und eine verbesserte Verarbeitbarkeit aus der Schmelze aus.

Beim Einsatz polarer ungesättigter Monomerer werden polarmodifizierte Polyolefine erhalten, die insbesondere als chemische Koppler in Thermoplast-Glasfaserverbunden oder als selbsthaftende polymere Beschichtungsmaterialien für metallische Oberflächen Verwendung finden können.

Die Erfindung wird durch folgende Beispiele erläutert:

Beispiel 1:

In einen mit Schaufeln gerührten Edelstahlreaktor mit einem Füllvolumen von 0,2 m$^3$ wurden 50 kg Polypropylen(PP) - Pulver (PP-Homopolymer, MFI= 0,21, Fa. PCD-Polymere) pneumatisch zugeführt. Über einen Verdampfer wurden 500g Tert.-butylperoxypivalat ($A_s$ = 6,8 x1o$^{-16}$ s ; $B_s$ = -14090 cal/Mol ) und 500g Styren unter Vakuum verdampft und über das Kreislaufgas in den Reaktor eingetragen, wo die Substanzen auf und in den PP-Partikeln sorbiert wurden. Die Temperatur im Reaktor lag bei 59°C, der Überdruck bei 0,2 bar, die mittlere Sorptionszeit $\tau_S$ betrug 1800 s. Anschließend wurde das PP über Teflonrohre durch einen Kondensator geführt, in dem auf und in den PP-Partikeln aus dem gegenströmenden Gasstrom rd. 5% Wasser und 2% Aceton kondensieren. Nach dem Kondensator wurde das Polypropylen in Teflonrohren durch einen speziell auf schwach absorbierende Medien abgestimmten Mikrowellenapplikator geleitet.

Als Mikrowellenapplikator wurden zwei hintereinander angeordnete H$_{113}$-Resonatoren einer unbelasteten Güte von rd. 100 verwendet, wobei der Produktstrom aufgeteilt und durch 2 Maxima der elektrischen Felder der Resonatoren geleitet wurde.

Die mittlere Verweilzeit des Polypropylens im 2,45 GHz Mikrowellenfeld betrug 3 Minuten, die Leistung jedes an den Resonator angekoppelten Magnetrons betrug 12oo W. Am Ausgang des Mikrowellenapplikators hatte das, Polypropylen eine Massetemperatur von rd. 100°C erreicht.

Nach Durchlauf des Mikrowellenapplikators wurde das styrenmodifizierte PP in den Postreaktor gefördert und mit einem Stabilisatorgemisch aus Ionol / Irgaphos 3052/ Irganfos 168 / Irganox 1010 vermischt. Nach einer mittleren Verweilzeit von 30 min bei einer Temperatur von 120°C wurde das Produkt in einem Zweischneckenextruder mit einem L/D-Verhältnis von 30 bei 240°C aufgeschmolzen und bei einem Durchsatz von 10 kg/Std. granuliert. Das resultierende styrenmodifizierte Polypropylen besitzt einen Schmelzindex von 0,15 g/10 Min.(230°C/2,16 kp)., die Pfropfausbeute beträgt 90%. Der Gehalt an Restperoxid liegt unter o,1%. Daraus hergestellte Prüfkörper besitzen eine Kerbschlagzä-

higkeit von 20 kJ/m$^2$ (Schlagzähigkeit nach Charpy, ISO 179, 23,5°C, gekerbte Probekörper) und eine Spannungsrißbeständigkeit (5%Levantinlösung, 50°C, 9N/mm$^2$ Last) von 270 Stunden.

Beispiel 2

Analog zu Beispiel 1 wurde ein styrengepfropftes Propylen-Ethylen-Copolymer hergestellt. Als Ausgangsprodukt diente ein statistisches Copolymer mit einem Ethylengehalt von 6% und einem MFI von 0.22. Als Radikalbildner wurde im Beispiel 2a) Tert.-butylperoxypivalat und im Beispiel 2b) Tert.butylperoxybenzoat eingesetzt.

Das resultierende styrenmodifizierte Propylen-Ethylen-Copolymer nach Beispiel 2a) besitzt einen Schmelzindex von 0,13 g/10 Min.(230°C/2,16 kp)., die Pfropfausbeute beträgt 88%. Der Gehalt an Restperoxid liegt unter o,1%. Daraus hergestellte Prüfkörper besitzen eine Kerbschlagzähigkeit von 61 kJ/m$^2$ (Schlagzähigkeit nach Charpy, ISO 179, 23,5°C, gekerbte Probekörper) und eine Spannungsrißbeständigkeit (5% Levantinlösung, 50°C, 9N/mm$^2$ Last) von 350 Stunden.

Die entsprechenden Werte für das styrenmodifizierte Propylen-Ethylen-Copolymer nach Beispiel 2b) betragen 0,17 g/10Min., 92%, <0,1%, 55 kJ/m$^2$ und 230 Stunden.

Beispiel 3 (Vergleichsbeispiel)

Analog zu Beispiel 1 wurde ein gepfropftes PP hergestellt, wobei die Aktivierung des Peroxidzerfalls thermisch erfolgte. Dazu wurde PP-Pulver in einen Edelstahlreaktor mit flüssigem tert.Butylperoxypivalat (75% in Mineralöl) und Styren gemischt und auf eine Reaktionstemperatur von 80°C aufgeheizt. Nach einer Reaktionszeit von 90 min wurde das Produkt analog zum Bespiel 1 stabilisiert und granuliert. Das erhaltene Produkt zeigte eine Kern/Mantelstruktur und war inhomogen, was sich besonders durch niedrige Spannungsrißbeständigkeit des Produktes zeigte.

Das resultierende styrenmodifizierte Polypropylen besitzt einen Schmelzindex von 0,20 g/10 Min.(230°C/2,16 kp)., die Pfropfausbeute beträgt 85%. Der Gehalt an Restperoxid liegt unter o,1%. Daraus hergestellte Prüfkörper besitzen eine Kerbschlagzähigkeit von 45 kJ/m$^2$ (Schlagzähigkeit nach Charpy, ISO 179, 23,5°C, gekerbte Probekörper) und eine Spannungsrißbeständigkeit (5%Levantinlösung, 50°C, 9N/mm$^2$ Last) von 150 Stunden.

Beispiel 4

Analog zu Beispiel 1 wurde ein gepfropftes PP hergestellt, der Versuch wurde jedoch ohne den Zusatz von mikrowellenaktiven Hilfsstoffe durchgeführt. Als thermisch zerfallender Radikalbildner wurde tert.Butylperoxipivalat (700g/50 kg Polypropylen) eingesetzt. Bei einer mittleren Verweilzeit der Polyolefinpartikel im Mikrowellenapplikator von 10 min wurde eine Massetemperatur von 130°C erreicht, der Restperoxidgehalt lag bei rd. 0,2%. Das resultierende styrenmodifizierte Polypropylen besitzt einen Schmelzindex von 0,15 g/10 Min.(230°C/2,16 kp)., die Pfropfausbeute beträgt 82%. Der Gehalt an Restperoxid liegt unter o,1%. Daraus hergestellte Prüfkörper besitzen eine Kerbschlagzähigkeit von 50 kJ/m$^2$ (Schlagzähigkeit nach Charpy, ISO 179, 23,5°C, gekerbte Probekörper) und eine Spannungsrißbeständigkeit (5%Levantinlösung, 50°C, 9N/mm$^2$ Last) von 200 Stunden.

Beispiel 5

In einen mit Schaufeln gerührten Edelstahlreaktor mit einem Füllvolumen von 0,2 m$^3$ wurden 45 kg Polypropy-len(PP) - Pulver (PP-Homopolymer, MFI= 0,21, Fa. PCD-Polymere) pneumatisch zugeführt. Über einen Verdampfer wurden 260 g Tert.-butylperoxypivalat ($A_s = 6,8 \times 1o^{-16}$ s ; $B_s$ = -14090 cal/Mol ) und 2,25 kg Methylmethacrylat unter Vakuum verdampft und über das Kreislaufgas in den Reaktor eingetragen, wo die Substanzen auf und in den Polypropylen-Partikeln sorbiert wurden. Die Temperatur im Reaktor lag bei 62°C, der Überdruck bei 0,2 bar, die mittlere Sorp-tionszeit $\tau_S$ betrug 2300 s.

Anschließend wurde das Polypropylen entsprechend Beispiel 1 durch einen Kondensator in den Mikrowellenapplikator geleitet.

Die mittlere Verweilzeit des Polybuten-1 im 2,45 GHz Mikrowellenfeld betrug 4 Minuten, die Leistung jedes an den Resonator angekoppelten Magnetrons betrug 12oo W. Am Ausgang des Mikrowellenapplikators hatte das Polypropylen eine Massetemperatur von rd. 105°C erreicht.

Nach Durchlauf des Mikrowellenapplikators wurde das modifizierte Polypropylen in den Postreaktor gefördert und mit 200g Bis-tetramethylpiperidylsebazat als Stabilisator vermischt. Nach einer mittleren Verweilzeit von 20 min bei einer Temperatur von 105°C wurde das Produkt in einem Zweischneckenextruder mit einem L/D-Verhältnis von 30 bei 195°C aufgeschmolzen und bei einem Durchsatz von 10 kg/Std. granuliert. Das resultierende Methylmethacrylat-modifizierte Polypropylen besitzt einen Schmelzindex von 0,12 g/10 Min.(230°C/2,16 kp)., die Pfropfausbeute beträgt 95%. Der Gehalt an Restperoxid liegt unter o,1%.

Beispiel 6

In einen mit Schaufeln gerührten Edelstahlreaktor mit einem Füllvolumen von 0,2 m$^3$ wurden 52 kg Polyethylen hoher Dichte (Schmelzindex 15,8g/10 Min. bei 190°C/5 kp) pneumatisch zugeführt. Über einen Verdampfer wurden 450g Tert.-butylperoxybutyrat, 550g Vinyltrimethylsilan und 85g Butadien unter Vakuum verdampft und über das Kreislaufgas in den Reaktor eingetragen, wo die Substanzen auf und in den PE-Partikeln sorbiert wurden. Die Temperatur im Reaktor lag bei 58°C, der Überdruck bei 0,2 bar, die mittlere Sorptionszeit $\tau_S$ betrug 2000 s. Anschließend wurde das Polybuten-1 entsprechend Beispiel 1 durch einen Kondensator in den Mikrowellenapplikator geleitet.

Die mittlere Verweilzeit des PE im 2,45 GHz Mikrowellenfeld betrug 3 Minuten, die Leistung jedes an den Resonator angekoppelten Magnetrons betrug 12oo W. Am Ausgang des Mikrowellenapplikators hatte das Polypropylen eine Massetemperatur von rd. 100°C erreicht.

Nach Durchlauf des Mikrowellenapplikators wurde das modifizierte PE in den Postreaktor gefördert und mit 230g Thio-bis-tert.butylmethylphenol als Stabilisator vermischt. Nach einer mittleren Verweilzeit von 30 min bei , einer Temperatur von 110°C wurde das Produkt in einem Zweischneckenextruder mit einem L/D-Verhältnis von 30 bei 210°C aufgeschmolzen und bei einem Durchsatz von 10 kg/Std. granuliert. Das resultierende modifizierte PE besitzt einen Schmelzindex von 2,2g/10 Min. bei 190°C/5kp. Die Pfropfausbeute beträgt 90%. Der Restperoxidgehalt liegt unter o,1%.

Beispiel 7

In einen mit Schaufeln gerührten Edelstahlreaktor mit einem Füllvolumen von 0,2 m$^3$ wurden 47 kg Poly-4-methylpenten-1-Pulver ($T_g$=300K, $M_w$= 6 x 10$^5$) pneumatisch zugeführt. Über einen Verdampfer wurden 500g tert. Butylperoxvpivalat und 800g tert.Butylacrylat unter Vakuum verdampft und über das Kreislaufgas in den Reaktor eingetragen, wo die Substanzen auf und in den Poly-4-methylpenten-1-Partikeln sorbiert wurden. Die Temperatur im Reaktor lag bei 60°C, der Überdruck bei 0,2 bar, die mittlere Sorptionszeit $\tau_S$ betrug 2150 s.

Anschließend wurde das Poly-4-methylpenten-1 entsprechend Beispiel 1 durch einen Kondensator in den Mikrowellenapplikator geleitet.

Die mittlere Verweilzeit des Poly-4-methylpenten-1 im 2,45 GHz Mikrowellenfeld betrug 15 Minuten, die Leistung jedes an den Resonator angekoppelten Magnetrons betrug 12oo W. Am Ausgang des Mikrowellenapplikators hatte das Poly-4-methylpenten-1 eine Massetemperatur von rd. 140°C erreicht.

Nach Durchlauf des Mikrowellenapplikators wurde das modifizierte Poly-4-methylpenten-1 in den Postreaktor gefördert und mit 200g tert.Butyldiisopropylphenol als Stabilisator vermischt. Nach einer mittleren Verweilzeit von 30 min bei einer Temperatur von 140°C wurde das Produkt in einem Zweischneckenextruder mit einem L/D-Verhältnis von 30 bei 255°C aufgeschmolzen und bei einem Durchsatz von 10 kg/Std. granuliert. Das resultierende modifizierte Poly-4-methylpenten-1 besitzt eine Glastemperatur von 294 K und ein Molmassen-Gewichtsmittel von 8 x 10$^5$. Die Pfropfausbeute beträgt 87%. Der Restperoxidgehalt liegt unter o,1%.

Beispiel 8

In einen mit Schaufeln gerührten Edelstahlreaktor mit einem Füllvolumen von 0,2m$^3$ wurden 50 kg eines linearen Polyethylen - Pulvers [PE-Homopolymer, MFI= 1,9g/10Min.(190°C/5kp) ] pneumatisch zugeführt. Über einen Verdampfer wurden 450g tert.Butylperoxypivalat ($A_s$=6,8 x1o$^{-16}$ s , B= -14090 cal/Mol ) und 450g Butylacrylat unter Vakuum verdampft und über das Kreislaufgas in den Reaktor eingetragen, wo die Substanzen auf und in den Polyethylen-Partikeln sorbiert wurden. Die Temperatur im Reaktor $T_1$ lag bei 55°C, der Überdruck bei 0,2 bar, die mittlere Verweilzeit $\tau_S$ des PE betrug 35 Minuten. Danach wurde das mit Modifikatoren beladene Polyethylenpulver kontinuierlich einer Rüttelrinne mit einer effektiven Heizfläche von 0,1 m$^2$ zugeführt. Die Rüttelrinne ist gegenüber der Umgebung gekapselt und steht unter Stickstoffatmosphäre, die Temperierung erfolgt durch Heizöl einer Temperatur von 85°C. Die Oberflächentemperatur der Rüttelrinne betrug rd. 80°C. Nach einer mittleren Verweilzeit von 2,5 Min. wird das modifizierte Polyethylen in einen Postreaktor gefördert und mit o,65% eines Stabilisatorgemischs aus Ionol und Irganox 1o1o versetzt. Nach einer mittleren Verweilzeit von 5o min bei einer Temperatur von 100°C wurde das Produkt in einem Doppelschneckenextruder ( L/D = 30) bei 210°C aufgeschmolzen und granuliert. Das resultierende modifizierte Polyethylen besitzt einen IR-spektroskopisch bestimmten Gehalt an gebundenem Butylacrylat von 0,92% und einen Schmelzindex von 0,95 g/10 min (190°C/5 kp).

Beispiel 9

In einen mit Schaufeln gerührten Edelstahlreaktor mit einem Füllvolumen von 0,2m$^3$ wurden 45kg eines linearen Polypropylen-Pulvers [PP-Homopolymer, MFI= 0,21g/10Min.(230°C/2,16kp) ] pneumatisch zugeführt. Über einen Verdampfer wurden 410g Tert.-butylperoxybutyrat ($A_s$=1.5x1o$^{-15}$ s , $B_S$= -15100 cal/Mol ) und 550g Styren unter Vakuum verdampft und über das Kreislaufgas in den Reaktor eingetragen, wo die Substanzen auf und in den Polypropylen-Partikeln sorbiert wurden. Die Temperatur im Reaktor $T_1$ lag bei 59°C, der Überdruck bei 0,2 bar, die mittlere Verweilzeit $\tau_S$ des PP betrug 1800 s. Danach wurde das mit Modifikatoren beladene Polypropylenpulver kontinuierlich einer Rüttelrinne mit einer effektiven Heizfläche von 0,1 $m^2$ zugeführt. Die Rüttelrinne ist gegenüber der Umgebung gekapselt und steht unter Stickstoffatmosphäre, die Temperierung erfolgt durch Heizöl einer Temperatur von 105°C. Die Oberflächentemperatur der Rüttelrinne betrug rd. 100°C. Nach einer mittleren Verweilzeit von 200 s wird das modifizierte Polypropylen in einen Postreaktor gefördert und mit o,55% eines Stabilisatorgemischs aus Ionol, Irgaphos 3052 und Irganox 1o1o versetzt. Nach einer mittleren Verweilzeit von 30 min bei einer Temperatur von 120°C wurde das Produkt in einem Doppelschneckenextruder ( L/D =, 30) bei 240°C aufgeschmolzen und granuliert.

Das resultierende modifizierte Polypropylen besitzt einen IR-spektroskopisch bestimmten Gehalt an gebundenem Styren von 1,1 % und einen Schmelzindex von 0,32 g/10 min (230°C/2,16 kp).

Beispiel 10

In einen mit Schaufeln gerührten Edelstahlreaktor mit einem Füllvolumen von 0,1 $m^3$ wurden 22 kg eines isotaktischen Polybuten-1 - Pulvers [PB-Homopolymer, $T_g$=248 K, $M_w$= 8 x $10^5$) pneumatisch zugeführt. Über einen Verdampfer wurden 105 g tert.Butylperoxybutyrat ($A_s$=1,5x1o$^{-15}$ s , $B_S$ = -15100 cal/Mol ) und 145g Butadien unter Vakuum verdampft und über das Kreislaufgas in den Reaktor eingetragen, wo die Substanzen auf und in den Polybuten-1-Partikeln sorbiert wurden. Die Temperatur im Reaktor $T_1$ lag bei 62°C, der Überdruck bei 0,15 bar, die mittlere Verweilzeit $\tau_S$ des PB betrug 60 Minuten. Danach wurde das mit Modifikatoren beladene Polybuten-1-Pulver kontinuierlich einer Rüttelrinne mit einer effektiven Heizfläche von 0,05 $m^2$ zugeführt. Die Rüttelrinne ist gegenüber der Umgebung gekapselt und steht unter Stickstoffatmosphäre, die Temperierung erfolgt durch Heizöl einer Temperatur von 115°C. Die Oberflächentemperatur der Rüttelrinne betrug rd. 110°C. Nach einer mittleren Verweilzeit von 800 s wird das modifizierte Polybuten-1 in einen Postreaktor gefördert und mit o,60% tert.Butyldioctadecylphenol als Stabilisator versetzt. Nach einer mittleren Verweilzeit von 55 min bei einer Temperatur von 110°C wurde das Produkt in einem Doppelschneckenextruder (L/D = 30) bei 162°C aufgeschmolzen und granuliert.

Das resultierende modifizierte Polybuten-1 besitzt einen IR-spektroskopisch bestimmten Gehalt an gebundenem Butadien von 0,61% und ein Molmassen-Gewichtsmittel von 8 x $10^5$.

Beispiel 11

In einen mit Schaufeln gerührten Edelstahlreaktor mit einem Füllvolumen von 0,2$m^3$ wurden 52 kg eines Propylen-Ethylen-Blockcopolymer- Pulvers [Ethylengehalt 8 Masse%, Schmelzindex 1,5 g/10 Min. bei 230°C/2,16 kp) pneumatisch zugeführt. Über einen Verdampfer wurden 450 g tert. Butylperoxypivalat ($A_s$=6,8 x1o$^{-16}$ s, $B_S$ = - 14090 cal/Mol ) und 650g Vinylimidazol unter Vakuum verdampft und über das Kreislauf-gas in den Reaktor eingetragen, wo die Substanzen auf und in den Propylen-Ethylen-Blockcopolymer-Partikeln sorbiert wurden. Die Temperatur im Reaktor $T_1$ lag bei 62°C, der Überdruck bei 0,2 bar, die mittlere Verweilzeit $\tau_S$ des Blockcopolymers betrug 40 Minuten. Danach wurde das mit Modifikatoren beladene Blockcopolymerpulver kontinuierlich einer Rüttelrinne mit einer effektiven Heizfläche von 0,1 $m^2$ zugeführt. Die Rüttelrinne ist gegenüber der Umgebung gekapselt und steht' unter Stickstoffatmosphäre, die Temperierung erfolgt durch Heizöl einer Temperatur von 100°C. Die Oberflächentemperatur der Rüttelrinne betrug rd. 95°C. Nach einer mittleren Verweilzeit von 300 s wird das modifizierte Blockcopolymer in einen Postreaktor gefördert und mit o,70% eines Stabilisatorgemischs aus Ditert.Butylisoamylphenol und Bis-tertramethylpiperidylsebazat versetzt. Nach einer mittleren Verweilzeit von 60 min bei einer Temperatur von 110°C wurde das Produkt in einem Doppelschneckenextruder ( L/D = 30) bei 235°C aufgeschmolzen und granuliert. Das resultierende modifizierte Propylen-Ethylen-Blockcopolymer besitzt einen IR-spektroskopisch bestimmten Gehalt an gebundenem Vinylimidazol von 1,15% und einen Schmelzindex von 2,35 g/10 Min. bei 230°C/2,16 kp.

Beispiel 12

In einen mit Schaufeln gerührten Edelstahlreaktor mit einem Füllvolumen von 0,1 $m^3$ wurden 20 kg eines Polypropylenpulvers nach Beispiel 2 pneumatisch zugeführt. Über einen Verdampfer wurden 280 g tert.Butylperoxvpivalat ($A_s$=6,8 x1o$^{-16}$ s, $B_S$= - 14090 cal/Mol ) und 290g Vinylphenyldimethylsilan unter Vakuum verdampft und über das Kreislaufgas in den Reaktor eingetragen, wo die Substanzen auf und in den Polypropylen-Partikeln sorbiert wurden. Die Temperatur im Reaktor $T_1$ lag bei 59°C, der Überdruck bei 0,15 bar, die mittlere Verweilzeit $\tau_S$ des Polypropylens betrug 30 Minuten. Danach wurde das mit Modifikatoren beladene Polypropylenpulver kontinuierlich einer Rüttelrinne mit einer effektiven Heizfläche von 0,05 $m^2$ zugeführt. Die Rüttelrinne ist gegenüber der Umgebung gekapselt und steht unter Stickstoffatmosphäre, die Temperierung erfolgt durch Heizöl einer Temperatur von 105°C. Die Oberflächentemperatur der Rüttelrinne betrug rd. 100°C. Nach einer mittleren Verweilzeit von 360 s wird das modifizierte Polypropylenpulver in einen Postreaktor gefördert und mit o,55% eines Stabilisatorgemischs aus Ionol und Irganox versetzt. Nach einer mittleren Verweilzeit von 40 min bei einer Temperatur von 110°C wurde das Produkt in einem Doppelschneckenextruder ( L/D = 30) bei 240°C aufgeschmolzen und granuliert. Das resultierende modifizierte Polypropylen besitzt einen IR-spektroskopisch bestimmten Gehalt an gebundenem Vinylphenyldimethylsilan von 1,28% und einen Schmelzindex von 0,85g/10Min bei 230°C/2,16kp.

Beispiel 13

In einen mit Schaufeln gerührten Edelstahlreaktor mit einem Füllvolumen von $0,2m^3$ wurden 50 kg eines linearen Polyethylen - Pulvers [PE-Homopolymer, MFI= 1,9g/10 Min.(190°C/5kp) ] pneumatisch zugeführt. Über einen Verdampfer wurden 150g Tert.-butylperoxvpivalat ($A_s$=6,8 x1o$^{-16}$ s , $B_S$ = -14090 cal/Mol ) und 150g Ethylacrylat unter Vakuum verdampft und über das Kreislaufgas in den Reaktor eingetragen, wo die Substanzen auf und in den Polyethylen-Partikeln sorbiert wurden. Die Temperatur im Reaktor $T_1$ lag bei 58°C, der Überdruck bei 0,2 bar, die mittlere Ver-weilzeit $\tau_S$ des PE betrug 14 Minuten. Danach wurde das mit Modifikatoren beladene Polyethylenpulver kontinuierlich einer Rüttelrinne mit einer effektiven Heizfläche von 0,1 $m^2$ zugeführt. Die Rüttelrinne ist gegenüber der Umgebung gekapselt und steht unter Stickstoffatmosphäre, die Temperierung erfolgt durch Heizöl einer Temperatur von 85°C. Die Oberfiächentemperatur der Rüttelrinne betrug rd. 90°C. Nach einer mittleren Verweilzeit von 2,8 Min. wird das modifizierte Polyethylen in einen Postreaktor gefördert und mit o,65% eines Stabilisatorgemischs aus Ionol und Irganox 1o1o versetzt. Nach einer mittleren Verweilzeit von 5o min bei einer Temperatur von 100°C wurde das Produkt in einem Doppelschneckenextruder (L/D = 30) bei 210°C aufgeschmolzen und granuliert. Das resultierende modifizierte Polyethylen besitzt einen IR-spektroskopisch bestimmten Gehalt an gebundenem Ethylacrylat von 0,24% und einen Schmelzindex von 0,85 g/10 min (190°C/5 kp).

Beispiel 14

In einen mit Schaufeln gerührten Edelstahlreaktor mit einem Füllvolumen von $0,2m^3$ wurden 45kg eines linearen Polypropylen-Pulvers [PP-Homopolymer, MFI= 0,21g/10 Min.(230°C/2,16kp) ] pneumatisch zugeführt. Über einen Verdampfer wurden 585g Tert.-butylperoxybutyrat ($A_s$=1.5x1o$^{-15}$ s , $B_S$= -15100 cal/Mol ) und 450g Styren unter Vakuum verdampft und über das Kreislaufgas in den Reaktor eingetragen, wo die Substanzen auf und in den Polypropylen-Partikeln sorbiert wurden. Die Temperatur im Reaktor $T_1$ lag bei 59°C, der Überdruck bei 0,2 bar, die mittlere Verweilzeit $\tau_S$ des PP betrug 1800 s. Danach wurde das mit Modifikatoren beladene Polypropylenpulver kontinuierlich einer Rüttelrinne mit einer effektiven Heizfläche von 0,1 $m^2$ zugeführt. Die Rüttelrinne ist gegenüber der Umgebung gekapselt und steht unter Stickstoffatmosphäre, die Temperierung erfolgt durch Heizöl einer Temperatur von 105°C. Die Oberflächentemperatur der Rüttelrinne betrug rd. 100°C. Nach einer mittleren Verweilzeit von 200 s wird das modifizierte Polypropylen in einen Postreaktor gefördert und mit 50 g tert.Butylacrylat versetzt. Nach einer mittleren Verweilzeit von 65 min bei einer Temperatur von 135°C wurde das Produkt nach Zusatz von 270g eines Stabilisatorgemischs aus Ionol, Irgaphos 3052 und Irganox 1010, 90 g Ruß sowie 110g Montanwachs in einem Doppelschneckenextruder ( L/D = 30) bei 260°C aufgeschmolzen und granuliert. Das resultierende modifizierte Polypropylen besitzt einen IR-spektroskopisch bestimmten Gehalt an gebundenem Styren von 0,94 %, an gebundenem tert.Butylacrylat von 0,05% und an gebundener Acrylsäure von 0,05% sowie einen Schmelzindex von 2,5g/10 min (230°C/2,16 kp).

Beispiel 15 (Vergleichsbeispiel)

In einen mit Schaufeln gerührten Edelstahlreaktor mit einem Füllyolumen von $0,2m^3$ wurden 50 kg eines linearen Polyethylen - Pulvers [PE-Homopolymer, MFI= 1,9g/10 Min.(190°C/5kp) ] pneumatisch zugeführt. In den Reaktor wurden 450g Tert.-butylperoxypivalat und 450g Butylacrylat flüssig eingetragen, wo die Substanzen durch die Polyethylen-Partikel sorbiert wurden. Die Temperatur im Reaktor $T_1$ lag bei 55°C, der Überdruck bei 0,2 bar, die mittlere Verweilzeit $\tau_S$ des PE betrug 35 Minuten. Danach wurde die Reaktortemperatur auf 80°C erhöht und das mit Modifikatoren beladene Polyethylenpulver 2,5 Min. bei dieser Temperatur belassen. Anschließend wird das modifizierte Polyethylen in einen Postreaktor gefördert und mit o,65% eines Stabilisatorgemischs aus Ionol und Irganox 1o1o versetzt. Nach einer mittleren Verweilzeit von 5o min bei einer Temperatur von 100°C wurde das Produkt in einem Doppelschneckenextruder ( L/D = 30) bei 210°C aufgeschmolzen und granuliert.
Durch Extraktion des Granulats mit Butanol werden 0,26% an Polybutylacrylat-Homopolymer abgetrennt. Das modifizierte Polyethylen besitzt einen IR-spektroskopisch bestimmten Gehalt an gebundenem Butylacrylat von 0, 52% und einen Schmelzindex von 0,45 g/10 min (190°C/5 kp).
Bei der Extraktion des modifizierten Polyethylens aus Beispiel 8 mit Butanol waren Anteile an Polybutylacrylat-Homopolymer nicht nachweisbar.

Beispiel 16 (Vergleichsbeispiel)

In einen mit Schaufeln gerührten Edelstahlreaktor mit einem Füllvolumen von 0,2m$^3$ wurden 45kg eines linearen Polypropylen-Pulvers [PP-Homopolymer, MFI= 0,21g/10 Min.(230°C/2,16kp) ] pneumatisch zugeführt. 410g tert.Butylperoxvbutyrat und 550g Styren wurden flüssig in den Reaktor eingetragen, wo die Substanzen durch die Polypropylen-Partikel sorbiert wurden. Die Temperatur im Reaktor T$_1$ lag bei 59°C, der Überdruck bei 0,2 bar, die mittlere Verweilzeit $\tau_S$ des PP betrug 1800 s. Danach wurde die Reaktortemperatur auf 100°C erhöht und das mit Modifikatoren beladene Polypropylenpulver 200 s bei dieser Temperatur belassen. Anschließend wird das modifizierte Polypropylen in einen Postreaktor gefördert und mit o,55% eines Stabilisatorgemischs aus Ionol, Irgaphos 3052 und Irganox 1o1o versetzt. Nach einer mittleren Verweilzeit von 30 min bei einer Temperatur von 120°C wurde das Produkt in einem Doppelschneckenextruder ( L/D = 30) bei 240°C aufgeschmolzen und granuliert.

Durch Extraktion des Granulats mit Tetrahydrofurfurylalkohol werden 0,36% an Polystyrol-Homopolymer abgetrennt. Das resultierende modifizierte Polypropylen besitzt einen IR-spektroskopisch bestimmten Gehalt an gebundenem Styren von 0,64% und einen Schmelzindex von 0,58 g/10 min (230°C/2,16 kp).

Bei der Extraktion des modifizierten Polypropylens aus Beispiel 9 mit Tetrahydrofurfurylalkohol waren Anteile an Polystyrol-Homopolymer nicht nachweisbar.

**Patentansprüche**

1. Kontinuierliches Verfahren zur Modifizierung von Polyolefinen in der festen Phase durch Umsetzung von Polyolefinpartikeln mit ungesättigten Monomeren in Gegenwart von thermisch zerfallenden Radikalbildnern und gegebenenfalls mikrowellenaktiven Hilfsstoffen, wobei die Polyolefinpartikel aus üblichen linearen oder verzweigten Polyethylen - Homo- und Copolymeren, Cycloolefin-Ethylen-Copolymeren, Polypropylen-Homopolymeren, statistischen Propylen-Copolymeren, Propylen-Blockcopolymeren, statistischen Propylen-Blockcopolymeren, elastomeren Polypropylenen, isotaktischem Polybuten-1 und/oder 4-Methylpenten-1- Homo- und -Copolymeren sowie aus Gemischen dieser Polyolefine bestehen, dadurch gekennzeichnet,

    a) daß in einem 1. Verfahrensschritt die ungesättigten Monomere und die thermisch zerfallenden Radikalbildner aus der Gasphase von den Polyolefinpartikeln, bevorzugt in Schneckenmischern als kontinuierliche Gas-Feststoff-Absorber, bei einer Temperatur T$_1$, die der Bedingung der Größengleichung T$_1$ [K] = B$_s$ / ln (A$_s$/$\tau_s$) genügt, sorbiert werden, wobei die stoffspezifische Konstante B$_S$ des thermisch zerfallenden Radikalbildners - 1,4 x 1o$^4$ bis - 1,8 x 1o$^4$ cal/Mol, die stoffspezifische Konstante A$_s$[s] 1 x 10$^{-15}$ bis 1 x 1o$^{-18}$ s und die mittlere Sorptionszeit $\tau_s$[s] 600 s bis 3600 s, bevorzugt 1200 bis 2400s, beträgt, und wobei als ungesättigte Monomere übliche Monovinylverbindungen, Divinylverbindungen, Allylverbindungen, Acrylsäure, Acrylsäurederivate, Diene, Methacrylsäure und/oder Methacrylsäurederivate in Anteilen von 0,05 bis 30 Masse%, bezogen auf die eingesetzten Polyolefine, angewandt werden;

    b) daß die Polyolefinpartikel, in denen die thermisch zerfallenden Radikalbildner und die ungesättigten Monomere sorbiert sind, in einem 2. Verfahrensschritt bei einer mittleren Verweilzeit von 5 s bis 1800 s auf die Zerfallstemperatur des thermisch zerfallenden Radikalbildners unter Mikrowelleneinwirkung oder konvektiver Wärmezuführung erwärmt werden;

    c) daß die modifizierten Polyolefine gegebenenfalls in einem 3.Verfahrensschritt in einen Postreaktor gefördert werden;

    d) daß die modifizierten Polyolefine in einem 4.Verfahrensschritt in an sich bekannter Weise einem kontinuierlichen Kneter oder Extruder zugeführt, dann erwärmt, aufgeschmolzen, entgast und granuliert werden,

    e) daß den Polyolefinen vor dem 1. Verfahrensschritt, im 2., 3. oder 4. Verfahrensschritt in an sich bekannter Weise als Hilfsstoffe 0,01 bis 2,5 Masse% Stabilisatoren, 0,1 bis 1 Masse% Antistatika, 0,2 bis 3 Masse% Pigmente, o,o5 bis 1 Masse% Nukleierungsmittel, 5 bis 4o Masse% Füll- und/oder Verstärkerstoffe, 2 bis 2o Masse% Flammschutzmittel und/oder o,o1 bis 1 Masse% Verarbeitungshilfsmittel, bezogen auf die eingesetzten Polyolefine, zugesetzt werden können.

2. Kontinuierliches Verfahren zur Modifizierung von Polyolefinen in der festen Phase nach Anspruch 1, dadurch gekennzeichnet, daß im 2.Verfahrensschritt die Erwärmung unter Mikrowelleneinwirkung in einem Hochfrequenzfeld einer Frequenz von 2,4 bis 2,5 GHz , bevorzugt unter Zusatz von aliphatischen und/oder aromatischen Alkoholen, Ketonen, Aldehyden, Estern, Wasser, Ruß und/oder Salzen der Stearinsäure als mikrowellenaktive Hilfsstoffe, und bevorzugt bei einer mittleren Verweilzeit der Polyolefinpartikel im Hochfrequenzfeld von 300 bis 600 s, erfolgt.

3. Kontinuierliches Verfahren zur Modifizierung von Polyolefinen in der festen Phase nach Anspruch 1 , dadurch gekennzeichnet, daß im 2.Verfahrensschritt die konvektive Erwärmung der Polyolefinpartikel, in denen die thermisch zerfallenden Radikalbildner und ungesättigten Monomere sorbiert sind, auf eine Temperatur $T_2[K]$, die der Bedingung der Größengleichung $T_2 = B_M / \ln A_M/\tau_M$ genügt, erfolgt, wobei die Konstante $B_M[cal/mol] - 1 \times 10^4$ bis $- 2 \times 10^4$ cal/Mol, vorzugsweise $- 1,4 \times 10^4$ bis $- 1,8 \times 10^4$ cal/Mol, die Konstante $A_M[s]$ $1 \times 10^{-13}$ bis $1 \times 10^{-16}$ s und die mittlere Verweilzeit $\tau_M$ [s] der Polyolefinpartikel bei der Temperatur $T_2$ bevorzugt 180 bis 1800 s beträgt, und wobei die konvektive Wärmezuführung durch Kontakt mit heißen Oberflächen oder mit einem heißen Gasstrom im Gegenstrom erfolgt.

4. Kontinuierliches Verfahren zur Modifizierung von Polyolefinen in der festen Phase nach Anspruch 1 und 3, dadurch gekennzeichnet, daß im 3. Verfahrensschritt c) im Postreaktor den modifizierten Polyolefinen zusätzlich weitere ungesättigte Monomere in Anteilen von 1 bis 40 Masse%, bezogen auf die Gesamtmonomermenge, zugesetzt werden.

5. Kontinuierliches Verfahren zur Modifizierung von Polyolefinen in der festen Phase nach Anspruch 1 bis 4, dadurch gekennzeichnet, daß als Diene Butadien und/oder Isopren eingesetzt werden.

6. Anwendung der modifizierten Polyolefine nach Anspruch 1 bis 5 sowie von Mischungen mit nichtmodifizierten Polyolefinen zur Herstellung von Folien, Fasern, Platten, Beschichtungen, Rohren, Hohlkörpern, Schaumstoffen und Formstoffen.